(19) Europäisches Patentamt / European Patent Office / Office européen des brevets

(11) **EP 4 667 427 A1**

(12) **EUROPEAN PATENT APPLICATION**
published in accordance with Art. 153(4) EPC

(43) Date of publication:
**24.12.2025   Bulletin 2025/52**

(21) Application number: **24756699.5**

(22) Date of filing: **02.02.2024**

(51) International Patent Classification (IPC):
**C03B 37/012** (2006.01)   **G02B 6/02** (2006.01)

(52) Cooperative Patent Classification (CPC):
**C03B 37/012; G02B 6/02**

(86) International application number:
**PCT/JP2024/003470**

(87) International publication number:
**WO 2024/171849 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.02.2023   JP 2023021002**

(71) Applicant: **Fujikura Ltd.**
**Tokyo 135-8512 (JP)**

(72) Inventor: **KAJIKAWA, Shota**
**Sakura-shi, Chiba 285-8550 (JP)**

(74) Representative: **Hoffmann Eitle**
**Patent- und Rechtsanwälte PartmbB**
**Arabellastraße 30**
**81925 München (DE)**

(54) **METHOD FOR PRODUCING BASE MATERIAL FOR MULTICORE FIBER**

(57)     A method for producing a base material (1P) for a multicore fiber includes: a preparation step (P1) of preparing a plurality of core rods (10P) and a cladding rod (20P) in which four or more even-numbered through holes (20PH) formed on a periphery (20PC) are positioned so as to form a plurality of sets (PA1) and (PA2) in each of which the through holes (20PH) are aligned in a radial direction; a determination step (P3) of determining a combination of the core rod (10P) and the through hole (20PH) such that in a case where the core rod (10P) is inserted into the through hole (20PH), when a sum of clearances between the core rod (10P) and an inner wall of the through hole (20PH) is taken for each of the sets (PA1) and (PA2), a residual sum of squares of each of the sums is minimized; and an insertion step (P4) of inserting the core rods (10P) into the respective through holes (20PH) in the determined combination of the core rods (10P) and the through hole (20PH).

FIG. 2

EP 4 667 427 A1

**Description**

Technical Field

The present invention relates to a method for producing a base material for a multicore fiber.

Background Art

In recent years, with a spread of an optical fiber communication system, the amount of information transmitted by an optical fiber has dramatically increased. In view of such a background, a multicore fiber in which outer peripheries of a plurality of cores are surrounded by one clad is used. Since the multicore fiber can transmit a plurality of signals by light propagated through each of the plurality of cores, a transmission capacity per optical fiber is increased.

Patent Literature 1 below describes a method for producing a multicore fiber. Specifically, core rods are inserted into a plurality of through holes formed in a cladding rod to be a clad of a multicore fiber, respectively, and the cladding rod and the core rods are drawn while being integrated to produce the multicore fiber.

[Patent Literature 1] JP 2019-38706 A

Summary of Invention

When a core rod is inserted into a through hole of a cladding rod as in the method for producing a multicore fiber of Patent Literature 1, a clearance is generated between an inner wall of the through hole of the cladding rod and an outer peripheral surface of the core rod. This clearance is crushed before the multicore fiber is produced. Therefore, a portion of an outer peripheral surface of the cladding rod facing the through hole into which the core rod is inserted is easily moved inward as compared with other positions because the clearance is crushed. In addition, the portion of the outer peripheral surface of the cladding rod more easily moves inward as the clearance is larger. However, there is a demand for suppressing a deviation of an outer shape of a clad of a multicore fiber from a circular shape.

Therefore, an object of the present invention is to provide a method for producing a base material for a multicore fiber, capable of producing a multicore fiber in which a deviation of an outer shape of a clad from a circular shape is suppressed.

A first aspect of the present invention for solving the above problem is a method for producing a base material for an optical fiber, the method including: a preparation step of preparing a cladding rod to be a clad of a multicore fiber, in which four or more even-numbered through holes formed on a predetermined periphery centered on a central axis of the cladding rod are positioned so as to form a plurality of sets in each of which the through holes are aligned in a radial direction of the cladding rod, and a plurality of core rods that are to be cores of the multicore fiber and can be inserted into the through holes, respectively; a determination step of determining a combination of the through hole and the core rod to be inserted into the through hole; and an insertion step of inserting the core rods into the respective through holes in the determined combination of the core rod and the through hole, in which in the determination step, a combination of the core rod and the through hole is determined such that in a case where the core rod is inserted into the through hole, when a sum of clearances between the core rod and an inner wall of the through hole is taken for each of the sets, a residual sum of squares of each of the sums is minimized.

When the clearances of the through holes aligned in the radial direction of the cladding rod are crushed, a portion of an outer peripheral surface of the cladding rod facing the through hole moves inward as described above, whereby the cladding rod is reduced in diameter in the radial direction in which these through holes are aligned. However, in the present invention, as described above, by taking a sum of the sizes of the clearances in each set and minimizing a residual sum of squares of each of the sums, the sums of the sizes of the clearances in the sets can be made closer to each other than before. Therefore, even when the cladding rod is reduced in diameter in the radial direction in which the through holes are aligned in each set by crush of the clearance, degrees of reduction in diameter in the alignment directions of the sets can be made closer to each other than before. That is, an extremely large reduction in diameter of a part of the cladding rod as compared with other parts can be suppressed. Therefore, by using a base material for a multicore fiber produced by the method for producing a base material for a multicore fiber, it is possible to produce a multicore fiber in which a deviation of an outer shape of a clad from a circular shape is suppressed.

A second aspect of the present invention is the method for producing a base material for a multicore fiber according to the first aspect, further including a measurement step of measuring an outer diameter of each of the core rods and a hole diameter of the through hole into which the core rod is inserted, in which the determination step is performed on the basis of a measurement result of the measurement step.

In this case, even when the outer diameter of the prepared core rod and the hole diameter of the through hole of the cladding rod are unknown or include an error, the outer diameter and the hole diameter can be clarified by the measurement step. Therefore, the determination step can be performed more accurately.

A third aspect of the present invention is the method for producing a base material for a multicore fiber according to the first or second aspect, in which the outer diameters of the core rods are different from each other, and the hole diameters of the through holes are different from each other.

In this case, glass rods having different outer diameters due to production variations can be effectively used, and a production yield of a base material for an optical fiber can be improved.

As described above, the present invention provides a method for producing a base material for a multicore fiber, capable of producing a multicore fiber in which a deviation of an outer shape of a clad from a circular shape is suppressed.

Brief Description of Drawings

[FIG. 1] FIG. 1 is a diagram illustrating a cross section of a multicore fiber according to an embodiment of the present invention, perpendicular to a longitudinal direction.
[FIG. 2] FIG. 2 is a diagram illustrating a base material for a multicore fiber for producing the multicore fiber of FIG. 1.
[FIG. 3] FIG. 3 is a diagram illustrating a flowchart for producing the base material for a multicore fiber of FIG. 2 and the multicore fiber of FIG. 1.
[FIG. 4] FIG. 4 is a diagram illustrating a state after a preparation step.
[FIG. 5] FIG. 5 is a diagram illustrating the size of a clearance.
[FIG. 6] FIG. 6 is a diagram illustrating a state of a drawing step.

Description of Embodiments

A preferable embodiment of a method for producing a base material for a multicore fiber according to the present invention will be described in detail below with reference to the drawings. The embodiment illustrated below is for facilitating understanding of the present invention and is not intended to limit the present invention. The present invention can be modified and improved from the embodiment within the scope of the claims. Note that the scale of each of the drawings may be different from the scale described in the following description for facilitating understanding.

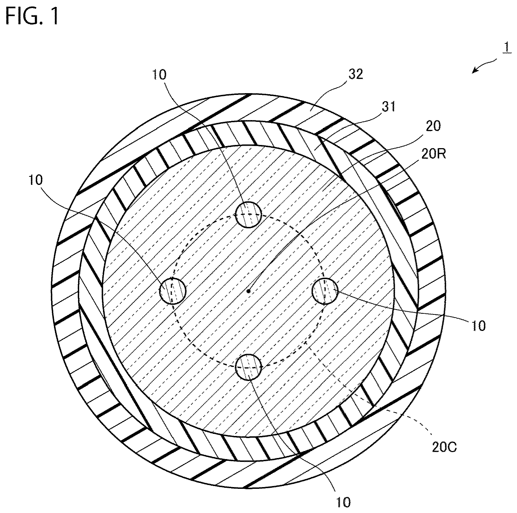

FIG. 1 is a diagram illustrating a cross section of a multicore fiber according to the present embodiment, perpendicular to a longitudinal direction. A multicore fiber 1 of the present embodiment includes four or more even-numbered cores 10, a clad 20 that surrounds outer peripheral surfaces of the cores 10 with no gap, an inner coating layer 31 that coats an outer peripheral surface of the clad 20, and an outer coating layer 32 that coats an outer peripheral surface of the inner coating layer 31. In the present embodiment, an example in which there are four cores 10 is illustrated.

The outer diameter of the clad 20 in a cross section perpendicular to a longitudinal direction is substantially circular. In the present embodiment, the cores 10 are arranged on a virtual periphery 20C centered on a central axis 20R of the clad 20. In addition, the cores 10 form a set aligned in a radial direction of the clad 20, and a plurality of the sets is formed. In the present embodiment, a distance between the cores 10 is fixed, and the cores 10 are arranged at positions that are substantially four-fold rotationally symmetric about the central axis 20R. The diameter of the core 10 is, for example, 4 $\mu$m or more and 10 $\mu$m or less.

A refractive index of each core 10 is higher than that of the clad 20, and a relative refractive index difference of each core 10 to the clad 20 is, for example, 0.2% or more and 2.0% or less. Such a core 10 is made of, for example, silica glass to which a dopant that increases a refractive index, such as germanium, is added, and the clad 20 is made of, for example, silica glass to which no dopant is added. In addition, the core 10 may be made of silica glass to which no dopant is added, and the clad 20 may be made of silica glass to which a dopant that decreases a refractive index, such as fluorine, is added.

The inner coating layer 31 and the outer coating layer 32 are each made of a resin such as an ultraviolet curable resin, and the inner coating layer 31 and the outer coating layer 32 are made of resins different from each other.

Next, a production method for producing the multicore fiber 1 of FIG. 1 will be described.

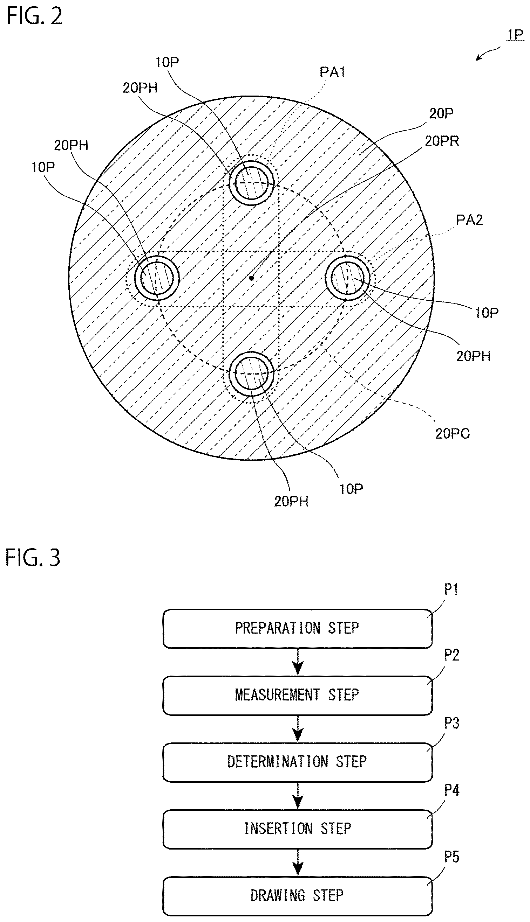

FIG. 2 is a diagram illustrating a state of a cross section of a base material for a multicore fiber for producing the multicore fiber 1 of FIG. 1, perpendicular to a longitudinal direction. A base material 1P for a multicore fiber includes a cladding rod 20P and a plurality of core rods 10P.

The cladding rod 20P is to be the clad 20 of the multicore fiber 1. The shape of an outer periphery of the cladding rod 20P is circular, and four or more even-numbered through holes 20PH are formed in the cladding rod 20P. The through holes 20PH are formed at equal intervals on a virtual periphery 20PC centered on a central axis 20PR of the cladding rod 20P. In the present embodiment, since the number of the cores 10 in FIG. 1 is four, the number of the through holes 20PH is four. The through holes 20PH are formed at equal intervals on the periphery 20PC, and a plurality of sets PA1 and PA2 of the through holes 20PH aligned in a radial direction of the cladding rod 20P are formed. In each of the sets PA1 and PA2, the through holes 20PH are aligned in the radial direction of the cladding rod 20P with the central axis 20PR interposed therebetween. In FIG. 2, the through holes 20PH surrounded by a dotted line indicating each of the sets PA1 and PA2 form a set.

The core rod 10P is inserted into each of the through holes 20PH. In the present embodiment, each of the core rods 10P is a glass rod to be the core 10 of the multicore fiber 1. Note that the core rod 10P may have a configuration in which an outer peripheral surface of a glass body to be the core 10 is coated with a glass layer to be a part of the clad 20.

FIG. 3 is a diagram illustrating a flowchart for producing the base material 1P for a multicore fiber of FIG. 2 and the multicore fiber 1 of FIG. 1. As illustrated in FIG. 3, the method for producing the base material 1P for a multicore fiber according to the present embodiment includes a preparation step P1, a measurement step P2, a determination step P3, and an insertion step P4, and the method for producing the multicore fiber 1 further includes a drawing step P5 in addition to these steps.

(Preparation step P1)

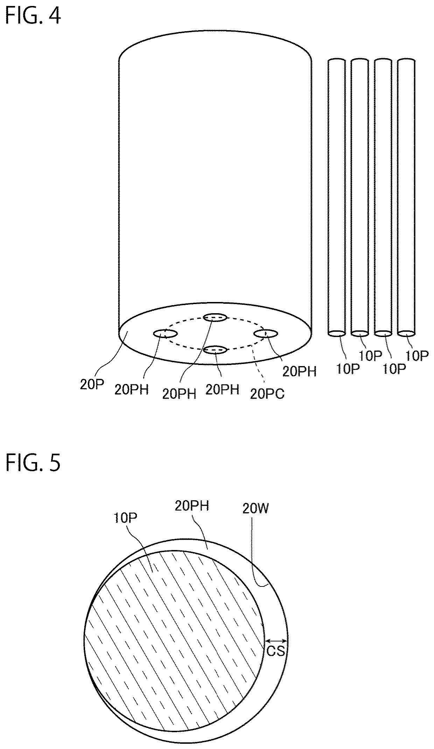

This step is a step of preparing the cladding rod 20P in which four or more even-numbered through holes 20PH are formed and which is to be the clad 20 of the multicore fiber 1, and the plurality of core rods 10P which can be inserted into the through holes 20PH, respectively, and which are to be the cores 10 of the multicore fiber 1. FIG. 4 is a diagram illustrating a state after the preparation step. As illustrated in FIG. 4, the number of the core rods 10P is the same as the number of the through holes 20PH. In addition, in the present embodiment, the length of the cladding rod 20P and the length of the core rod 10P are equal to each other. In this step, the core rod 10P and the cladding rod 20P may be prepared by production or may be prepared by purchase.

(Measurement step P2)

This step is a step of measuring the outer diameter of each of the core rods 10P and the hole diameter of the through hole 20PH into which the core rod 10P is inserted. The outer diameter of the core rod 10P is preferably measured at a plurality of places along a longitudinal direction. In this case, any one of a minimum value, a median value, an average value, and a maximum value of the outer diameters may be used as the outer diameter of the core rod 10P. In addition, the hole diameter of the through hole 20PH is preferably measured at a plurality of places along the longitudinal direction. In this case, any one of a minimum value, a median value, an average value, and a maximum value of the hole diameters may be used as the hole diameter of the through hole 20PH.

The outer diameter of the core rod 10P is measured by, for example, a caliper, a laser outer diameter measuring instrument, or a three-dimensional measuring instrument. The hole diameter of the through hole 20PH is measured by, for example, a caliper, a laser outer diameter measuring instrument, or a three-dimensional measuring instrument.

Note that when the outer diameter of the core rod 10P and the hole diameter of the through hole 20PH are known, this step does not have to be performed. Alternatively, when a specific core rod 10P or a specific cladding rod 20P is selected and prepared in the preparation step P1, the preparation step P1 may be performed by measuring the outer diameter of the core rod 10P before being selected or the hole diameter of the through hole 20PH of the cladding rod 20P before being selected, and then selecting the core rod 10P or the cladding rod 20P.

(Determination step P3)

This step is a step of determining a combination of the core rod 10P and the through hole 20PH such that in a case where the core rod 10P is inserted into the through hole 20PH, when a sum of clearances between the core rod 10P and an inner wall of the through hole 20PH is taken for each of the sets PA1 and PA2, a residual sum of squares of each of the sums is minimized. FIG. 5 is a diagram illustrating the size of the clearance. As illustrated in FIG. 5, the size CS of the clearance is a maximum distance between the core rod 10P and an inner wall 20W of the through hole 20PH when the core rod 10P is pressed against the inner wall 20W. Therefore, the size CS is substantially equal to a difference between the hole diameter of the through hole 20PH and the outer diameter of the core rod 10P. Therefore, this step is preferably performed on the basis of a measurement result of the measurement step P2.

Note that, in consideration of, for example, a case where the size CS of the clearance varies in the longitudinal direction, the size CS of the clearance is preferably measured at a plurality of places along the longitudinal direction. In this case, any one of a minimum value, a median value, an average value, and a maximum value of the sizes CS may be used as the size CS of the clearance. In addition, the size CS of the clearance may be measured on the basis of the entire length of the cladding rod 20P in the longitudinal direction, or may be measured on the basis of a part (for example, a portion serving as an effective portion of an optical fiber base material) of the cladding rod 20P in the longitudinal direction. The latter case may be performed because the total length of the produced optical fiber base material cannot be a product due to, for example, waste of a base material volume as a yield during processing of the base material or drawing. For example, when a central region that is a central portion of the produced optical fiber base material in the longitudinal direction (for example, a region having a length of 30 to 1000 mm on one end side and the other end side of an optical fiber base material centered on a center position of the optical fiber base material in the longitudinal direction) is an effective region of the optical fiber base material, it may be better to measure the size CS of the clearance on the basis of an average in the central regions. Therefore, the effect can be exhibited at a specific position of the cladding rod 20P in the longitudinal direction. In addition, when a maximum value is used as the size CS of the clearance, it is possible to maximally improve the amount of positional deviation of the produced optical fiber base material from a design value of a specific core.

Specifically, when the base material 1P for a multicore fiber for producing the multicore fiber 1 having four cores is produced as described above, a difference between the hole diameter of the through hole 20PH and the outer diameter of the core rod 10P is determined in a combination of each core rod 10P and each through hole 20PH. Then, a combination of the core rod 10P and the through hole 20PH in which a residual sum of squares of the sum of the differences for each of the pairs PA1 and PA2 is minimized is found. When the sums of the differences for the sets PA1 and PA2 are represented by "sum of clearances SUM1" and "sum of clearances SUM2", respectively, in the present embodiment, the residual sum of squares PRS can be expressed as follows, in which j is 1 to 2.

$$\text{PRS} = \Sigma(\text{sum of clearances SUMj})^2$$

In this step, a combination of the core rod 10P and the through hole 20PH with a minimum PRS is determined among combinations of the core rod 10P and the through hole 20PH. In this way, the through hole 20PH into which the core rod 10P is inserted is determined.

Note that, when a difference for each of the through holes 20PH is represented by "clearance size CS1", "clearance size CS2", "clearance size CS3", or "clearance size CS4", the residual sum of squares RS of the clearances of the through holes 20PH can be expressed as follows, in which i is 1 to 4.

$$\text{RS} = \Sigma(\text{size CSi of clearance})^2$$

Note that, as described above, in a combination of the core rod 10P and the through hole 20PH in which the residual sum of squares PRS is minimized by the determination step P3, the residual sum of squares RS is preferably minimized. In this case, the sizes CS of the clearances can be made closer to each other than before. Therefore, by using the base material 1P for a multicore fiber, it is possible to produce the multicore fiber 1 in which positional deviations of the cores 10 in the clad 20 are made closer to each other than before.

(Insertion step P4)

This step is a step of inserting the core rods 10P into the through holes 20PH, respectively, in the determined combination of the core rod 10P and the through hole 20PH. Through this step, the base material 1P for a multicore fiber illustrated in FIG. 2 is obtained. In the base material 1P for a multicore fiber produced in this way, the combination of the through hole 20PH and the core rod 10P is a combination in which a residual sum of squares of the sum of the clearances for each of the sets PA1 and PA2 is minimized.

Note that, in consideration of a case where the core rod is bent, the size of the clearance is preferably 0.1 mm or more.

(Drawing step P5)

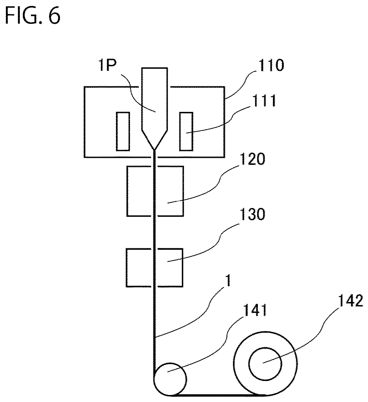

This step is a step of drawing the base material 1P for a multicore fiber to produce the multicore fiber 1. FIG. 6 is a diagram illustrating this step. In this step, first, dummy glass is welded to one end portion of the base material 1P for a multicore fiber, and a glass tube is welded to the other end portion. Then, the base material 1P for a multicore fiber is disposed in a drawing furnace 110, and the inside of the clearance is degassed through the glass tube. Next, the base material 1P for a multicore fiber is heated by a heating unit 111 of the drawing furnace 110. By this heating, a lower end of the base material 1P for a multicore fiber is brought into a molten state, and glass is drawn from the base material 1P for a multicore fiber. The drawn glass in a molten state is immediately solidified when coming out of the drawing furnace 110, the core rods 10P become the cores 10, respectively, and the cladding rod 20P becomes the clad 20. In this way, a bare wire of a multicore fiber constituted by the plurality of cores 10 and the clad 20 is obtained. Thereafter, the bare wire of the multicore fiber passes through a cooling device 120 and is cooled to an appropriate temperature. The cooled bare wire of the multicore fiber passes through a coating device 130 to form the inner coating layer 31 and the outer coating layer 32, and becomes the multicore fiber 1 illustrated in FIG. 1. Then, a direction of the multicore fiber 1 is changed by a turn pulley 141, and the multicore fiber 1 is wound by a reel 142. In this way, the multicore fiber 1 is produced.

Note that, in the present embodiment, after the insertion step P4, the base material 1P for a multicore fiber is drawn to produce the multicore fiber 1. That is, the multicore fiber 1 is produced by drawing the base material 1P for a multicore fiber in a state where the core rod 10P is inserted into the through hole 20PH and there is a clearance in the through hole 20PH. However, the present invention is not limited thereto. For example, a collapse step of collapsing the base material 1P for a multicore fiber and crushing the clearance of the through hole 20PH of the base material 1P for a multicore fiber may be performed, a multicore fiber intermediate which is an intermediate of the multicore fiber 1 may be produced, and the drawing step P5 of drawing the multicore fiber intermediate may be performed. When the collapse step is included, degassing in the drawing step P5 is unnecessary.

As described above, in the method for producing the base material 1P for a multicore fiber according to the present embodiment, in the determination step P3, a combination of the core rod 10P and the through hole 20PH is determined such that in a case where the core rod 10P is inserted into the through hole 20PH, when a sum of clearances between the core rod 10P and an inner wall of the through hole 20PH is taken for each of the sets PA1 and PA2, a residual sum of squares of each of the sums is minimized, and in the insertion step P4, the core rods 10P are inserted into the through holes 20PH, respectively, in the determined combination of the core rod 10P and the through hole 20PH.

According to the method for producing the base material 1P for a multicore fiber according to the present embodiment, the sums of the sizes of the clearances in the sets PA1 and PA2 can be made closer to each other than before. Therefore, even when the cladding rod 20P is reduced in diameter in the radial direction in which the through holes 20PH are connected in each of the sets PA1 and PA2 by crush of the clearance, degrees of reduction in diameter in the directions of the sets PA1 and PA2 can be made closer to each other than before. That is, an extremely large reduction in diameter of a part of the cladding rod 20P as compared with other parts can be suppressed. Therefore, by using the base material 1P for a multicore fiber produced by the method for producing the base material 1P for a multicore fiber, it is possible to produce the multicore fiber 1 in which a deviation of an outer shape of the clad 20 from a circular shape is suppressed.

In addition, in the present embodiment, the measurement step P2 of measuring the outer diameter of each of the core rods 10P and the hole diameter of the through hole 20PH is included, and the determination step P3 is performed on the basis of a measurement result of the measurement step P2. Therefore, even when the outer diameter of the prepared core rod 10P and the hole diameter of the through hole 20PH of the cladding rod 20P are unknown or include an error, the outer diameter and the hole diameter can be clarified by the measurement step P2. Therefore, the determination step P3 can be performed more accurately.

The present invention has been described above by exemplifying the embodiment, but the present invention is not limited to the embodiment.

For example, in the embodiment, the number of cores 10 is four, but the number is not particularly limited as long as the four or more even-numbered cores 10 are arranged on the periphery 20C. In addition, a core may be disposed at a center of the clad 20. For example, a multicore fiber having a plurality of cores 10 in a so-called 1-6 arrangement, in which one core 10 is disposed at the center of the clad 20 and six cores are arranged so as to surround the core 10, may be formed. In this case, the through holes 20PH formed in the cladding rod 20P of the base material 1P for a multicore fiber for producing the multicore fiber are also formed in 1-6 arrangement, and three sets of the through holes 20PH in each of which the through holes (20PH) are aligned in a radial direction of the cladding rod 20P are formed. In this case, in the determination step P3, i is 1 to 3 in the formula for determining the residual sum of squares PRS.

In the present invention, preferably, the outer diameters of the core rods 10P are different from each other, and the hole diameters of the through holes 20PH into which the core rods 10P are inserted, respectively, are different from each other. Glass rods having different outer diameters due to production variations can be effectively used, and a production yield of a base material for an optical fiber can be improved.

As described above, the present invention provides a method for producing a base material for a multicore fiber, capable of producing a multicore fiber in which a deviation of an outer shape of a clad from a circular shape is suppressed, and the method can be used in the field of optical communication and other devices using the multicore fiber.

## Claims

1.   A method for producing a base material for a multicore fiber, the method comprising:

a preparation step of preparing a cladding rod to be a clad of a multicore fiber, in which four or more even-numbered through holes formed on a predetermined periphery centered on a central axis of the cladding rod are positioned so as to form a plurality of sets in each of which the through holes are aligned in a radial direction of the cladding rod, and a plurality of core rods that are to be cores of the multicore fiber and can be inserted into the through holes, respectively;
a determination step of determining a combination of the through hole and the core rod to be inserted into the through hole; and
an insertion step of inserting the core rods into the respective through holes in the determined combination of the core rod and the through hole, wherein

in the determination step, a combination of the core rod and the through hole is determined such that in a case where the core rod is inserted into the through hole, when a sum of clearances between the core rod and an inner wall of the through hole is taken for each of the sets, a residual sum of squares of each of the sums is minimized.

2. The method for producing a base material for a multicore fiber according to claim 1, further comprising a measurement step of measuring an outer diameter of each of the core rods and a hole diameter of the through hole into which the core rod is inserted, wherein

the determination step is performed on a basis of a measurement result of the measurement step.

3. The method for producing a base material for a multicore fiber according to claim 1 or 2, wherein

the outer diameters of the core rods are different from each other, and the hole diameters of the through holes into which the respective core rods are inserted are different from each other.

FIG. 1

FIG. 2

FIG. 3

| |
|---|
| PREPARATION STEP |

P1

↓

| |
|---|
| MEASUREMENT STEP |

P2

↓

| |
|---|
| DETERMINATION STEP |

P3

↓

| |
|---|
| INSERTION STEP |

P4

↓

| |
|---|
| DRAWING STEP |

P5

FIG. 4

20P  20PH  20PH  20PH  20PC  20PH
10P  10P  10P  10P

FIG. 5

10P  20PH  20W
CS

FIG. 6

## INTERNATIONAL SEARCH REPORT

| International application No. |
|---|
| **PCT/JP2024/003470** |

| | |
|---|---|
| **A.** | **CLASSIFICATION OF SUBJECT MATTER** |
| | *C03B 37/012*(2006.01)i; *G02B 6/02*(2006.01)i |
| | FI: C03B37/012 A; G02B6/02 466 |

According to International Patent Classification (IPC) or to both national classification and IPC

| | |
|---|---|
| **B.** | **FIELDS SEARCHED** |

Minimum documentation searched (classification system followed by classification symbols)

C03B37/012; G02B6/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2014-159348 A (SUMITOMO ELECTRIC INDUSTRIES, LTD.) 04 September 2014 (2014-09-04) | 1-3 |
| A | JP 2015-168597 A (THE FURUKAWA ELECTRIC CO., LTD.) 28 September 2015 (2015-09-28) | 1-3 |
| A | JP 2007-121381 A (FUJIFILM CORPORATION) 17 May 2007 (2007-05-17) | 1-3 |

| | |
|---|---|
| ☐ Further documents are listed in the continuation of Box C. | ☑ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/003470**

| Patent document cited in search report | | | Publication date (day/month/year) | Patent family member(s) | | | Publication date (day/month/year) |
|---|---|---|---|---|---|---|---|
| JP | 2014-159348 | A | 04 September 2014 | US | 2016/0229733 | A1 | |
| | | | | WO | 2014/129553 | A1 | |
| | | | | EP | 2960218 | A1 | |
| | | | | CN | 105073663 | A | |
| JP | 2015-168597 | A | 28 September 2015 | US | 2016/0347645 | A1 | |
| | | | | WO | 2015/133239 | A1 | |
| | | | | EP | 3115344 | A1 | |
| JP | 2007-121381 | A | 17 May 2007 | (Family: none) | | | |

Form PCT/ISA/210 (patent family annex) (July 2022)

**EP 4 667 427 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019038706 A